# DEMANDE DE BREVET EUROPEEN

(11) **EP 0 668 467 A2**
(43) Date de publication de la demande: **23.08.1995**
(21) Numéro de dépôt: 94870200.6
(22) Date de dépôt: 21.12.1994
(51) Int. Cl.: F16L 55/165, F16L 58/10, B29C 63/36

(54) **Procédé de garnissage de conduites tubulaires par réversion**

(30) Priorité: 21.12.1993 BE 9301426
(71) Demandeur: CAPELLE, Robert, B-4052 Beaufays (BE)
(72) Inventeur: CAPELLE, Robert, B-4052 Beaufays (BE)

(57) **Abrégé**

Procédé de garnissage intérieur des conduites par réversion d'une gaine tubulaire souple avec revêtement en caoutchouc vulcanisé ou en élastomère thermoplastique, ou en matière thermoplastique; ladite gain étant aspirée dans la conduite.

## Description

Le procédé de garnissage des tubes par réversion permet d'introduire une gaine souple à l'intérieur d'une conduite en la retournant sous pression à partir d'un point fixe.

La gaine souple se compose essentiellement d'un revêtement, généralement exécuté en matière plastique, appliqué sur un support textile plus ou moins résistant et possédant une couche fibreuse permettant d'absorber une certaine quantité de résine.

Avant réversion, le revêtement est à l'extérieur tandis que la couche fibreuse est enfermée à l'intérieur. Par réversion, on inverse les positions de façon à placer le revêtement à l'intérieur de la conduite au contact des fluides et la couche fibreuse à l'extérieur en contact avec la paroi de la conduite.

Le garnissage des conduites par réversion est particulièrement adapté à la réhabilitation des conduites usées. Grâce à ce procédé, la gaine progresse sous pression dans la conduite restant en place sans entraîner ni terrassements ni démontage et remontage des tubes.

Pour la réhabilitation des conduites urbaines d'eau, de gaz ou de liquides résiduaires, la gaine comporte généralement un revêtement mince, le plus souvent exécuté en matière plastique de façon à restituer à la conduite usée ou détériorée son étanchéité.

Par ailleurs, le procédé de garnissage par réversion permet également le traitement préventif des tubes neufs à condition de disposer de qualités de revêtement adaptées aux différentes sollicitations. La structure de la gaine brevétée suivant le n° PCT/BE92/00006 - demande européenne n° 92904952.6, a été conçue précisément pour pouvoir diversifier les qualités de revêtements en fonction des sollicitations rencontrées.

Dans le cas du traitement préventif de conduites neuves et le plus souvent de conduites industrielles, l'exécution du garnissage est soumise à des exigences différentes de celles rencontrées pour les traitements de réhabilitation des conduites usées ou détériorées.

En ce qui concerne le traitement préventif de conduites neuves, il faut atteindre des valeurs d'adhérence élevées entre gaine et paroi.

Ces valeurs résultent d'une préparation de surface soignée qui ne peut généralement pas être assurée dans les conduites souterraines à réhabiliter.

Les techniques de préparation de surface qui sont d'autant moins adaptées que les conduites à traiter sont plus usées ou plus détériorées comportent principalement les traitements suivants : sablage, dégraissage s'il s'agit de conduites métalliques, enduisage d'une couche d'accrochage (primer) susceptible de nécessiter un traitement thermique.

On peut assurer ces différents traitements en chaîne dans des ateliers spécialisés connus sous la dénomination de "Coating Plant" mais également dans les ateliers non spécialisés adaptés à des cadences plus réduites.

En résumé, en ce qui concerne le traitement préventif aux exigences déjà citées, à savoir
1. disponibilité d'une gamme de revêtements permettant de résister efficacement à une grande diversité de sollicitations;
2. état de surface des parois de tube permettant d'obtenir in fine les adhérences requises

s'ajoutent deux exigences supplémentaires concernant
1. adaptation de la réversion aux diamètres des plus grosses conduites de transport;
2. adaptation de la réversion aux conditions de montage des tubes dans le cadre d'installation d'usine.

En ce qui concerne l'adaptation aux grands diamètres, l'état actuel des équipements de réversion sous pression pneumatique ou hydraulique est limité par rapport aux diamètres des conduites de très grand débit.

En ce qui concerne le montage des tubes dans une installation industrielle, on reconnaît ne pas pouvoir échapper ni à des vérifications ni à des modifications de longueur avant la mise en place définitive. Dans ces conditions, il est évidemment plus rationnel d'appliquer le revêtement seulement après vérification et ajustement définitif de chaque longueur.

Suivant l'invention décrite ci-après, la réversion d'une gaine tubulaire souple avec un revêtement en caoutchouc vulcanisé ou en élastomère thermoplastique ou en matière plastique est réalisé par aspiration exercée sur la gaine et s'adapte de cette façon aux exigences particulières rencontrées lors du traitement préventif des conduites neuves.

Le procédé de réversion par aspiration, découlant de la présente invention, est décrit sur la base des dessins annexés, à titre d'exemple, montrant en
FIG. 1 la gaine souple avant réversion;
FIG. 2 la gaine souple après réversion;
FIG. 3 la réversion par pression pneumatique;
FIG. 4 la réversion par pression hydraulique;
FIG. 5 la réversion par aspiration suivant la présente invention;
FIG. 6 garnissage en retrait découlant de la présente invention.

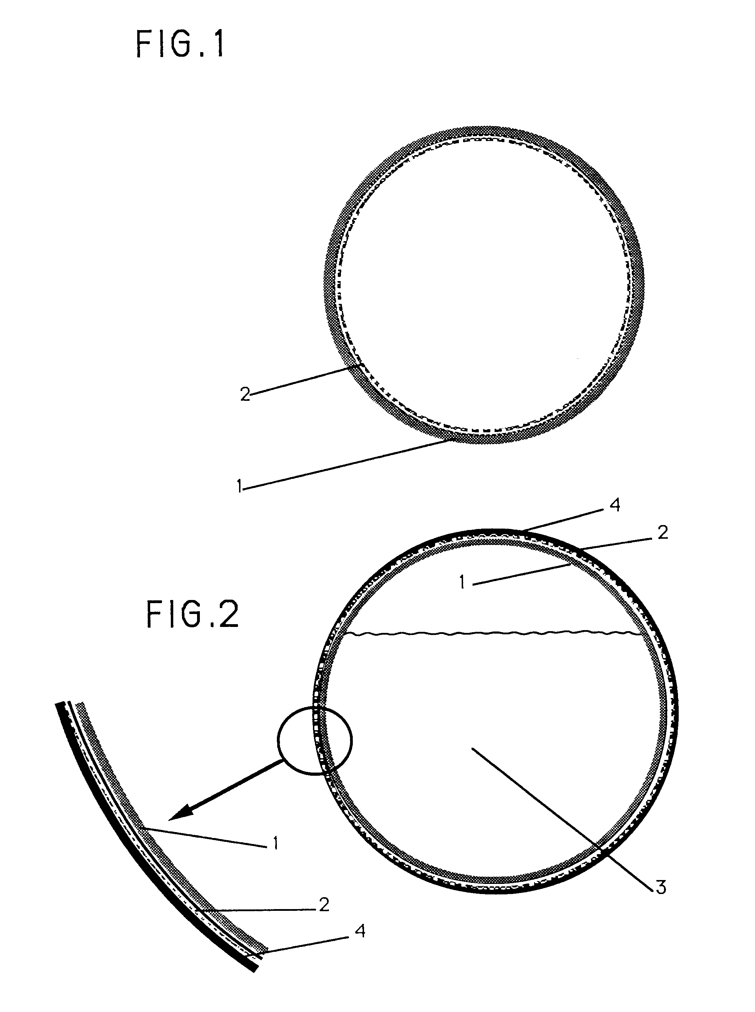

Les gaines souples, représentées en FIG. 1, utilisées par ce procédé, comportent généralement un revêtement d'étanchéité 1 ou de protection placé sur un support textile 2 comprenant une couche fibreuse.

Avant réversion, le revêtement protecteur 1 est extérieur tandis que la couche fibreuse 2 est intérieure à la gaine.

Cette dernière couche sera imprégnée de résine avant retournement.

Par réversion représentée en FIG. 2, le revêtement 1 va être placé vers l'intérieur de la conduite 4, en contact avec la circulation des fluides 3 tandis que la couche fibreuse 2, imprégnée de résine, sera appliquée contre la paroi de la conduite 4.

Grâce à ce procédé, on traite des longueurs de conduite correspondant aux longueurs de gaine à condition de disposer, dans la conduite, d'un point d'introduction et d'un point de sortie.

On traite de cette façon, des conduites aériennes ou enterrées sans les démonter.

En se retournant, sous pression,la gaine s'étale contre la paroi intérieure du tube. La polymérisation de la résine permet, suivant la constitution de la couche fibreuse et l'état de surface de la paroi, de faire adhérer la gaine à la conduite ou de former une structure résistante et auto-portante sans devoir adhérer à la paroi.

### Fonctionnement du retournement.

La pression de retournement peut être pneumatique ou hydraulique.

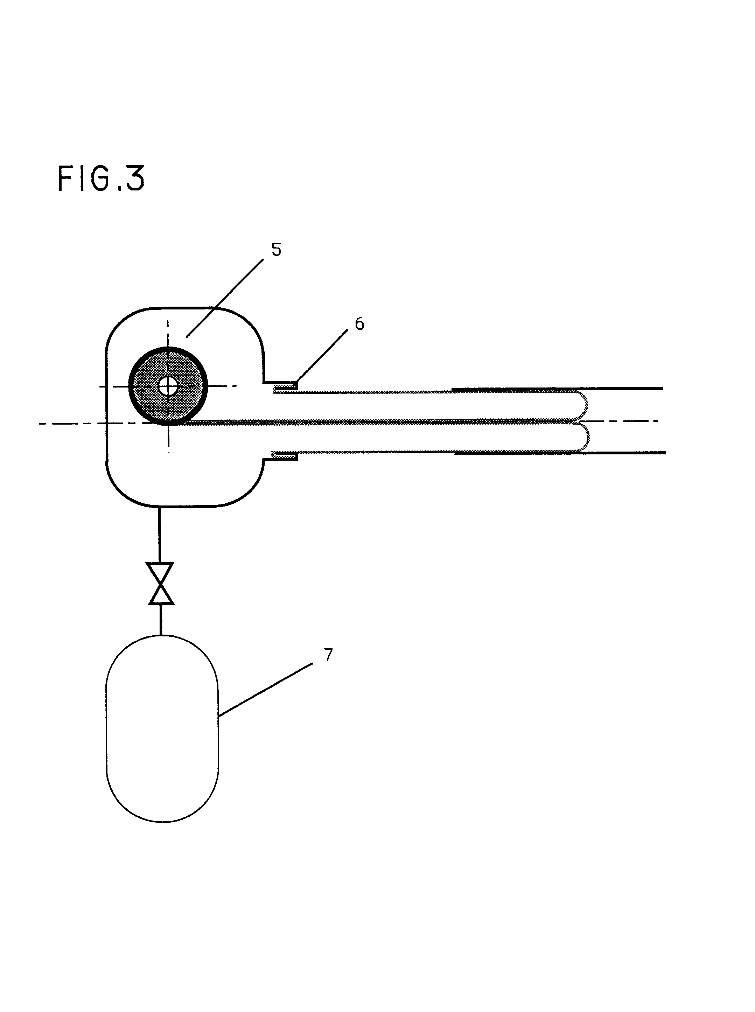

Dans le cas de la pression pneumatique représentée en FIG. 3, la gaine enroulée autour d'un axe est enfermée dans une cuve étanche 5 soumise à la pression.

L'extrémité libre de la gaine est fixée sur la tubulure 6 placée à la sortie de la cuve.

Dès que la pression venant du compresseur 7 est suffisante, la gaine entre en phase de retournement, sort de la cuve et progresse dans la conduite moyennant régulation de la pression.

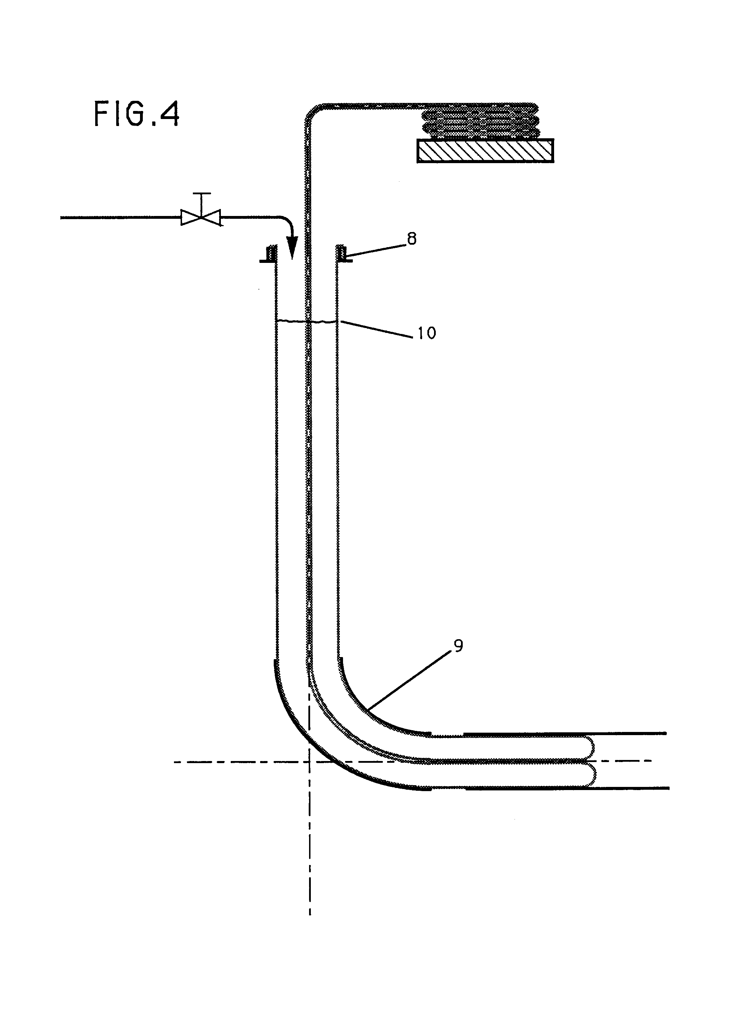

Si on utilise la pression hydraulique, par exemple la pression résultant de la hauteur d'une colonne d'eau représentée en FIG. 4, dès que celle-ci est suffisante, elle déclenche le retournement et la progression de la gaine à partir d'un point fixe 8 situé au niveau supérieur de la colonne d'eau. Au niveau inférieur 9, cette tubulure se termine par un coude permettant d'orienter la gaine vers la conduite.

Au fur et à mesure de la progression dans la conduite, il faut maintenir une hauteur d'eau suffisante 10 compte tenu du volume d'eau nécessaire au remplissage de la conduite.

Dans les deux cas, on obtient dans la poche formée par la gaine, la pression nécessaire à l'intérieur d'un système étanche.

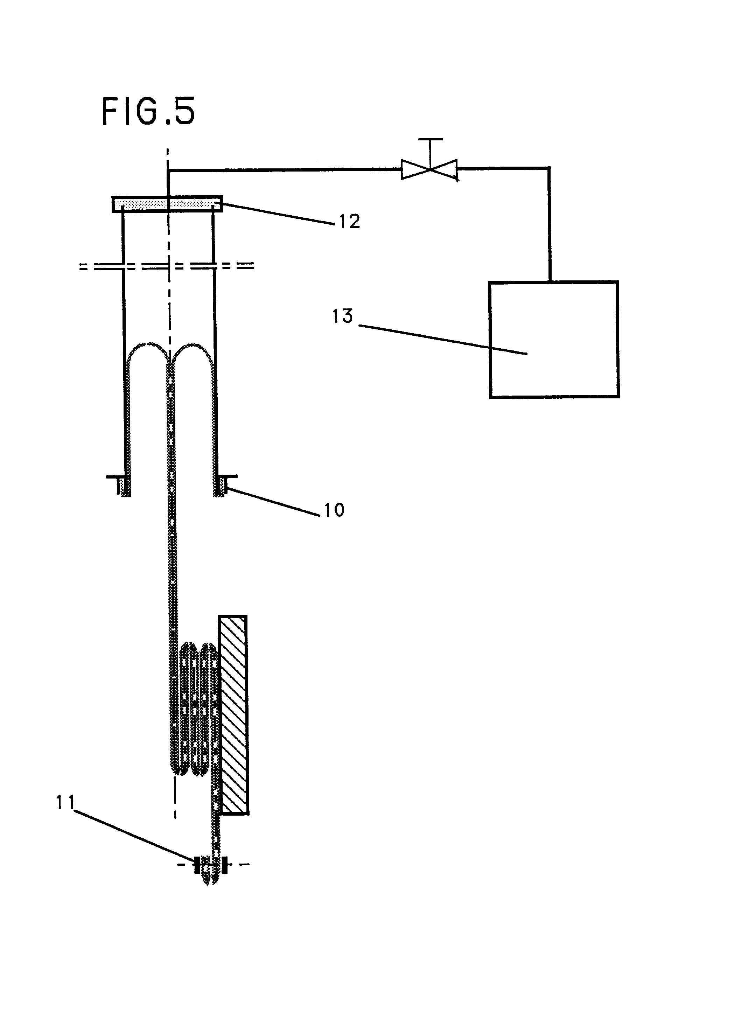

L'objet de la présente invention représentée en FIG. 5 consiste à remplacer la pression développée dans ce système étanche par le contraire, c'est-à-dire en présentant en amont un système ouvert à la pression atmosphérique, et en aval dans la conduite, un système étanche, soumis à une dépression.

Suivant le niveau de la dépression, la pression résultant de la pression atmosphérique pourra varier de 0, là 0,5 B et davantage si nécessaire.

### Réalisation.

Préalablement, on peut effectuer les traitements de surface en vue d'obtenir une adhérence conforme entre la gaine et la paroi.

Avant de retourner, imprégner de résine la couche fibreuse à l'intérieur de la gaine.

Ces conditions étant remplies, on introduit et on serre la gaine à l'entrée de la conduite par retournement d'une extrémité autour d'une virole 10 qui sera emmanchée à l'entrée de la conduite par serrage.

Ensuite, on ferme l'autre extrémité de la gaine 11, librement étalée en dehors de la conduite.

A la sortie opposée de la conduite, placer un plateau obturateur 12, raccordé à un ventilateur aspirant ou à une pompe à vide 13. Dès que la dépression est suffisante, la gaine progresse en se retournant dans la conduite et s'étale contre la paroi intérieure.

On termine l'opération en procédant à la polymérisation de la résine par traitement thermique approprié (air chaud, ou vapeur, ou eau chaude).

### Avantages obtenus.

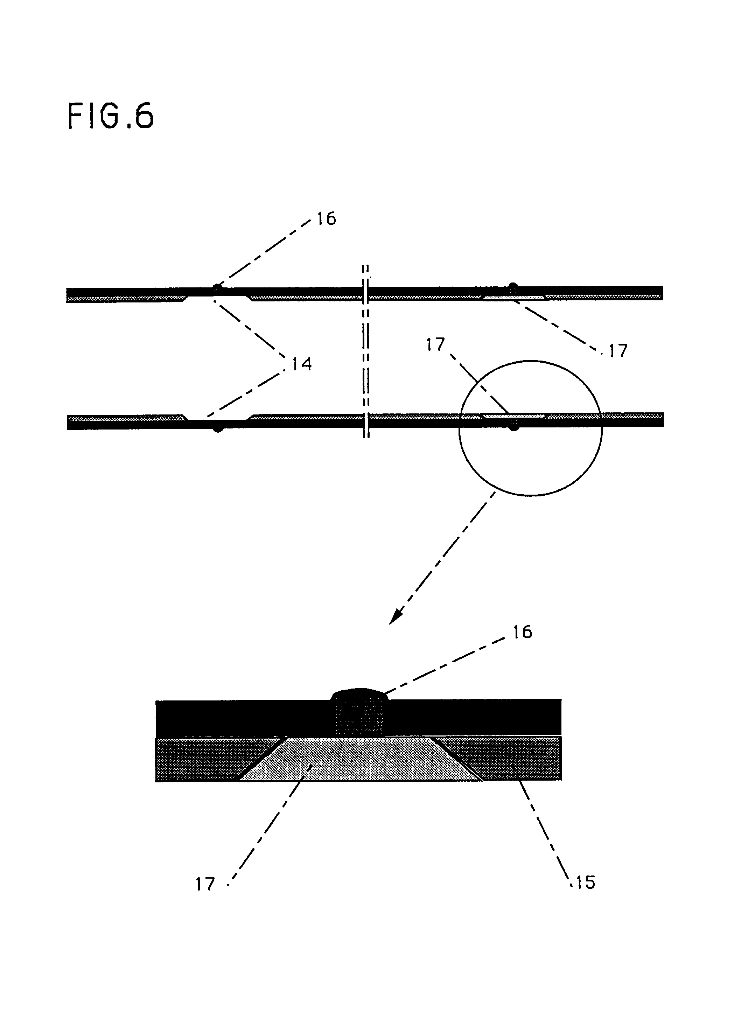

1. Equipement de mise en place simplifié, adapté à des garnissages tube par tube, sur site ou en atelier.
2. Exploitation des ressources existantes dans les ateliers, par exemple, sablage. Application d'un primer. Traitement thermique.
3. Garnissage en retrait des extrémités FIG. 6 de façon à réserver une zone non revêtue 14 permettant de souder deux tubes sans affaiblir le revêtement. 15.

De cette façon, ce procédé permet d'améliorer l'exécution des assemblages de tubes par soudure 16 sur site.

Après soudure, mise en place d'une manchette 17 pour recouvrir la zone exposée à la soudure et assurer une jonction résistante entre les deux parties.

4. Extension aux grands diamètres.

Elimination des difficultés propres aux équipements de réversion sous pression, en ce qui concerne les grands diamètres.

## Revendications

1. Procédé de garnissage intérieur des conduites par réversion d'une gaine tubulaire souple avec revêtement en caoutchouc vulcanisé ou en élastomère thermoplastique, ou en matière thermoplastique caractérisé par l'aspiration de la gaine dans la conduite.

2. Procédé de garnissage suivant revendication 1 caractérisé par la fixation de la gaine à l'entrée de la conduite par retournement sur un collier rigide intérieur et serrage de ce collier dans le tube pour obtenir une étanchéité suffisante à une extrémité, la partie de la gaine non fixée, reposant librement en dehors du tube, étant fermée à son autre extrémité.

3. Procédé de garnissage suivant revendications 1 et 2 caractérisé par l'obturation de l'autre extrémité du tube par un plateau fixé hermétiquement et raccordé à un ventilateur aspirant ou à une pompe à vide.

4. Procédé de garnissage suivant revendication 1 caractérisé par une dépression modulable pour adapter la dépression aux contraintes de retournement et d'avancement de la gaine.

5. Procédé de garnissage suivant revendication 1 caractérisé en ce que la réversion par aspiration s'effectue sur un lit fluide pour diminuer les effets de friction résultant du contact direct entre surfaces à coefficient de friction élevé.
